# EUROPEAN PATENT APPLICATION

(11) **EP 4 221 111 A1**
(43) Date of publication of application: **02.08.2023**
(21) Application number: 21873001.8
(22) Date of filing: 28.09.2021
(51) Int. Cl.: H04L 27/26, H04L 5/00, H04L 25/03

(54) **METHOD AND DEVICE FOR TRANSMITTING/RECEIVING SIGNAL IN WIRELESS COMMUNICATION SYSTEM**

(30) Priority: 28.09.2020 KR 20200126089
(71) Applicant: LG Electronics Inc., Yeongdeungpo-gu Seoul, 07336 (KR)
(72) Inventor: SHIN, Seokmin, Seoul 06772 (KR); KIM, Kijun, Seoul 06772 (KR); KIM, Jaehyung, Seoul 06772 (KR); KO, Hyunsoo, Seoul 06772 (KR); KIM, Seonwook, Seoul 06772 (KR)
(74) Representative: Mooser, Sebastian Thomas
(86) International application number: PCT/KR2021/013200
(87) International publication number: WO 2022/065973

(57) **Abstract**

Abstract: A method and a device for transmitting/receiving a signal in a wireless communication system, according to one embodiment of the present disclosure, receive control information about a first data signal, and transmit the first data signal on the basis of the control information. The first data signal can be transmitted on the basis of the CP structure shown in figure 9 or figure 10.

## Description

### [Technical Field]

The present disclosure relates to a method and apparatus for use in a wireless communication system, and more particularly to a method and apparatus for transmitting and receiving a data signal.

### [Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### [Disclosure]

### [Technical Problem]

An objective of the present disclosure is to provide a method of transmitting and receiving a signal and an apparatus therefor for effectively performing a process of transmitting and receiving a data signal in a wireless communication system.

The technical problem of the present disclosure is not limited to the above-described technical problem, and other technical problems may be inferred from the embodiments of the present disclosure.

### [Technical Solution]

The present disclosure provides a method and apparatus for transmitting and receiving a signal in a wireless communication system.

According to an aspect of the present disclosure, a method of transmitting and receiving a signal by a first user equipment (UE) in a wireless communication system includes receiving control information of a first data signal, and receiving the first data signal based on the control information, wherein the first data signal is included in a Frequency Division Multiplexed (FDMed) signal, and the FDMed signal includes a second data signal for a second UE, a first Subcarrier Spacing (SCS) and a first Cyclic Prefix (CP) are applied to the first data signal, and a second SCS and a second CP are applied to the second data signal, based on that the first SCS is larger than the second SCS, a boundary of a sub- OFDM symbol group to which the first SCS is applied is configured to coincide with one OFDM symbol boundary to which the second SCS is applied, and based on reception of specific signaling from a base station (BS), the first CP applied to the sub-OFDM symbol group is configured in the same section as the second CP in a time domain, a CP section is not located between sub-OFDM symbols in the sub- OFDM symbol group, and circulation based on the first CP is performed only on a last symbol in the time domain among the sub-OFDM symbols.

According to another aspect of the present disclosure, a method of transmitting and receiving a signal by a base station (BS) in a wireless communication system includes transmitting control information of a first data signal, and transmitting the first data signal to a first user equipment (UE) based on the control information, wherein the first data signal is included in a Frequency Division Multiplexed (FDMed) signal, and the FDMed signal includes a second data signal for a second UE, a first Subcarrier Spacing (SCS) and a first Cyclic Prefix (CP) are applied to the first data signal, and a second SCS and a second CP are applied to the second data signal, based on that the first SCS is larger than the second SCS, a boundary of a sub- OFDM symbol group to which the first SCS is applied is configured to coincide with one OFDM symbol boundary to which the second SCS is applied, and the first CP applied to the sub-OFDM symbol group is configured in the same section as the second CP in a time domain, a CP section is not located between sub-OFDM symbols in the sub- OFDM symbol group, and circulation based on the first CP is performed only on a last symbol in the time domain among the sub-OFDM symbols.

According to another aspect of the present disclosure, an apparatus, a processor, and a storage medium for performing the signal transmission and reception method may be provided.

In the methods and the apparatuses, a number of sub-OFDM symbols included in the sub-OFDM symbol group may be determined based on a ratio between the first SCS and the second SCS.

In the methods and the apparatuses, the second SCS may be applied to the control information.

In the methods and the apparatuses, a Demodulation Reference Signal (DM-RS) related to the first data signal may be received at a time point preceding the sub-OFDM symbol group, and the second SCS may be applied to the DM-RS.

In the methods and the apparatuses, based on (i) a distance between the first UE and the BS and (ii) a distance between the second UE and the BS, the first SCS may be applied to the first data signal and the second SCS may be applied to the second data signal.

The apparatus may at least include a UE, a network, and an autonomous driving vehicle that is capable of communicating with another autonomous driving vehicle other than the communication device.

The aspects of the disclosure are only a part of the preferred embodiments of the disclosure, and various embodiments based on technical features of the disclosure may be devised and understood by the person with ordinary skill in the art based on the detailed description of the disclosure.

### [Advantageous Effects]

According to an embodiment of the present disclosure, effective signal transmission and reception may be advantageously performed through an operation differentiated from the conventional technology when a data signal is transmitted and received between communication devices.

The technical effects of the present disclosure are not limited to the above-described technical effects, and other technical effects may be inferred from the embodiments of the present disclosure.

### [Description of Drawings]

FIG. 1 illustrates a radio frame structure.
FIG. 2 illustrates a resource grid during the duration of a slot.
FIG. 3 illustrates a self-contained slot structure.
FIG. 4 illustrates a wireless communication system supporting an unlicensed band.
FIG. 5 illustrates an exemplary method of occupying resources in an unlicensed band.
FIGS. 6 and 7 are flowcharts illustrating channel access procedures (CAPs) for signal transmission in an unlicensed band.
FIGS. 8 to 11 illustrate methods of transmitting and receiving a signal according to an embodiment of the present disclosure.
FIGS. 12 to 15 show an example of apparatuses according to an embodiment of the present disclosure.

### [Best Mode]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

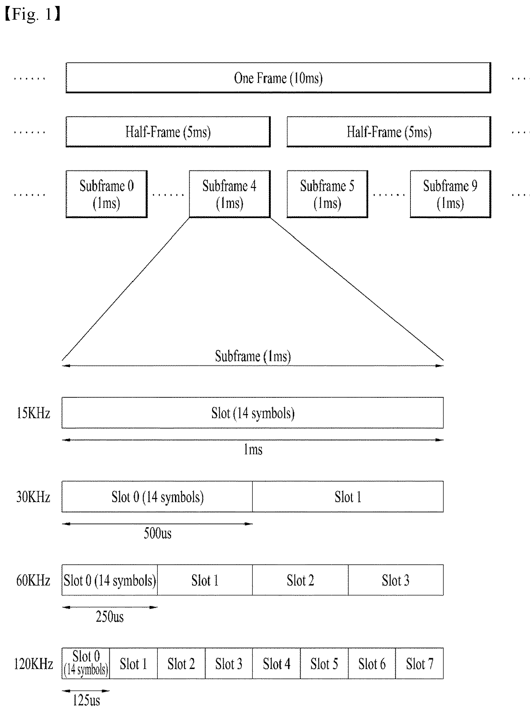

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15^{∗}2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| ^{∗} N^{slot}_{symb}: number of symbols in a slot ^{∗} N^{frame,u}ₛₗₒₜ: number of slots in a frame ^{∗} N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15∗2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

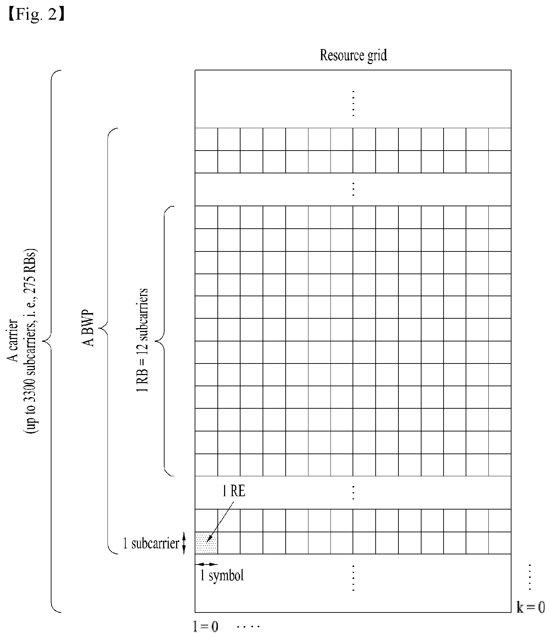

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

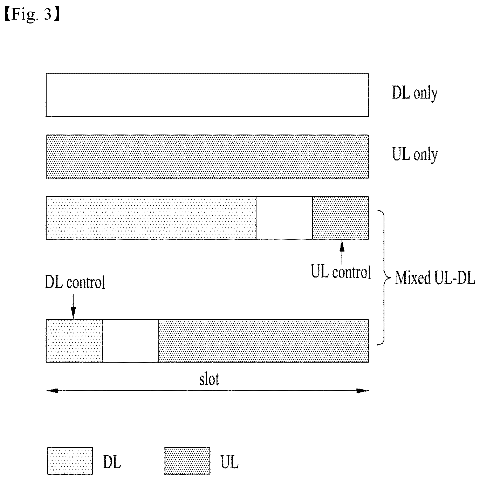

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.
1. DL only configuration
2. UL only configuration
3. Mixed UL-DL configuration

- DL region + Guard period (GP) + UL control region
- DL control region + GP + UL region

* DL region: (i) DL data region, (ii) DL control region + DL data region
* UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. The GP provides a time gap in the process of the UE switching from the transmission mode to the reception mode or from the reception mode to the transmission mode. Some symbols at the time of switching from DL to UL within a subframe may be configured as the GP.

In the present disclosure, a base station (BS) may be, for example, a gNode B (gNB).

### 1. Wireless Communication System Supporting Unlicensed Band

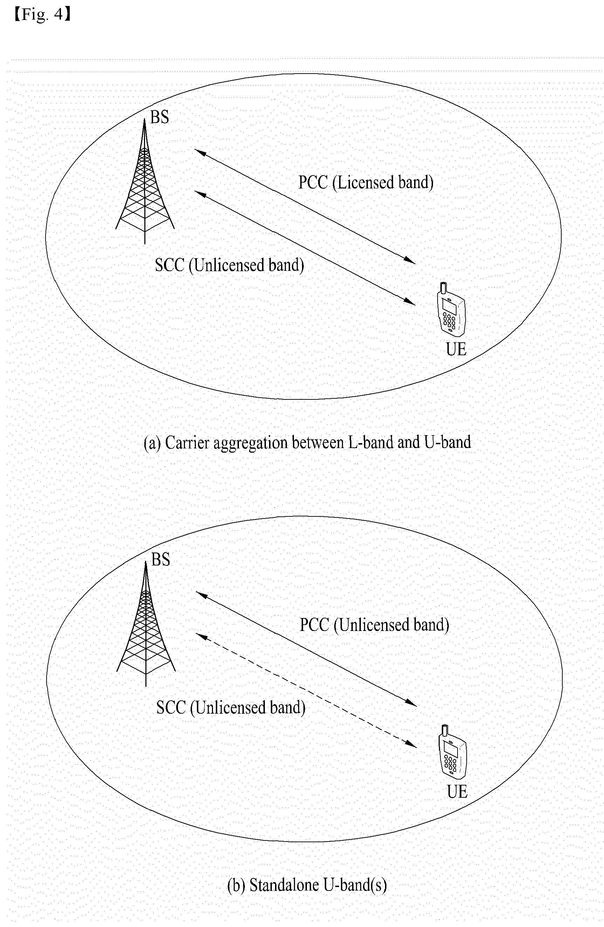

FIG. 4 illustrates an exemplary wireless communication system supporting an unlicensed band applicable to the present disclosure.

In the following description, a cell operating in a licensed band (L-band) is defined as an L-cell, and a carrier of the L-cell is defined as a (DL/LTL) LCC. A cell operating in an unlicensed band (U-band) is defined as a U-cell, and a carrier of the U-cell is defined as a (DL/LTL) UCC. The carrier/carrier-frequency of a cell may refer to the operating frequency (e.g., center frequency) of the cell. A cell/carrier (e.g., CC) is commonly called a cell.

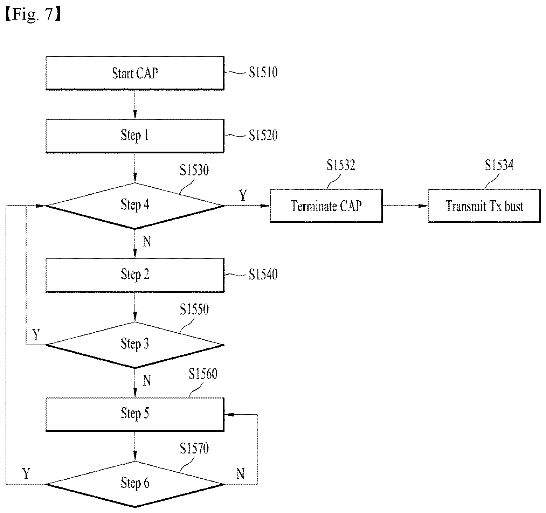

When a UE and a BS transmit and receive signals in a carrier-aggregated LCC and UCC as illustrated in FIG. 4(a), the LCC may be configured as a primary CC (PCC) and the UCC may be configured as a secondary CC (SCC). As illustrated in FIG. 7(b), the UE and the BS may transmit and receive signals in one UCC or a plurality of carrier-aggregated UCCs. That is, the UE and the BS may transmit and receive signals only in UCC(s) without an LCC.

(Unless otherwise specified), a signal transmission/reception operation in an unlicensed band described in the present disclosure may be performed based on all the above-described deployment scenarios.

### Radio frame structure for unlicensed band

The NR frame structure of FIG. 1 may be used for an operation in an unlicensed band. The configuration of OFDM symbols occupied for UL/DL signal transmission in the frame structure for the unlicensed band may be configured by the BS. The term OFDM symbol may be replaced with SC-FDM(A) symbol.

In the following description, a plurality of CCs (CC indexes) may be replaced with a plurality of BWPs (BWP indexes) configured in one (or more) CC(s) or (serving) cell(s), or a plurality of CCs/cells each including a plurality of BWPs (i.e., CC (index)-BWP (index) combinations). In this situation, the proposed principle/operations of the present disclosure are also applicable in the same manner.

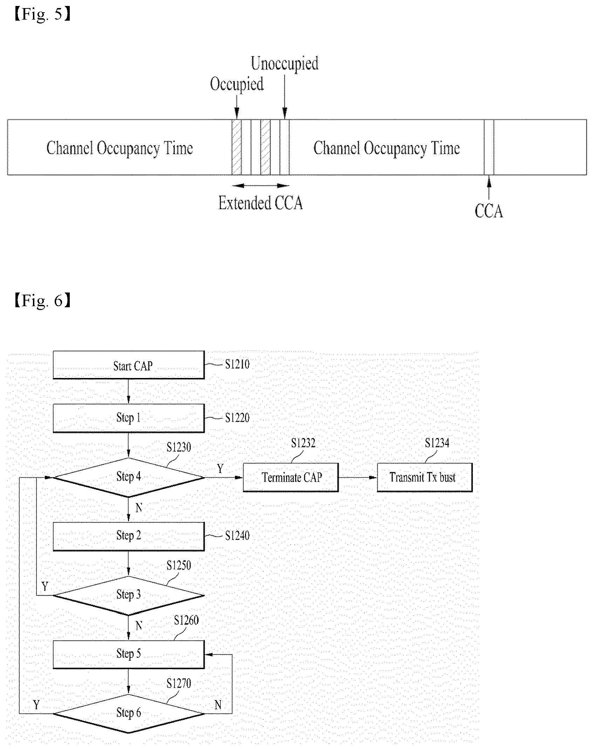

FIG. 5 illustrates an exemplary method of occupying resources in an unlicensed band. According to regional regulations for the U-band, a communication node in the U-band needs to determine whether a corresponding channel is used by other communication node(s) before transmitting a signal. Specifically, the communication node may perform carrier sensing (CS) before transmitting the signal so as to check whether the other communication node(s) perform signal transmission. When the other communication node(s) perform no signal transmission, it is said that clear channel assessment (CCA) is confirmed. When a CCA threshold is predefined or configured by higher layer signaling (e.g., RRC signaling), if the detected channel energy is higher than the CCA threshold, the communication node may determine that the channel is busy. Otherwise, the communication node may determine that the channel is idle. When it is determined that the channel is idle, the communication node may start the signal transmission in the UCell. The Wi-Fi standard (802.11ac) specifies a CCA threshold of 62 dBm for non-Wi-Fi signals and a CCA threshold of -82 dBm for Wi-Fi signals. The sires of processes described above may be referred to as Listen-Before-Talk (LBT) or a channel access procedure (CAP). The LBT may be interchangeably used with the CAP or CCA.

Specifically, for DL reception/LTL transmission in an unlicensed band, one or more of the following channel access procedure (CAP) methods may be used in a wireless communication system related to the present disclosure.

### Method of transmitting DL signal in unlicensed band

To transmit a DL signal in an unlicensed band, the BS may indicate the configuration of OFDM symbols used in subframe #n to the UE by signaling. The term subframe may be replaced with slot or time unit (TU).

The BS may perform one of the following unlicensed band access procedures (e.g., CAPs) to transmit a DL signal in the unlicensed band.

### (1) First DL CAP method

FIG. 6 is a flowchart illustrating a DL CAP for DL signal transmission in an unlicensed band, performed by a BS.

For DL signal transmission (e.g., transmission of a DL signal such as a PDSCH/PDCCH/enhanced PDCCH (EPDCCH)), the BS may initiate a CAP (S1210). The BS may randomly select a backoff counter N within a contention window (CW) according to step 1. N is set to an initial value Nᵢₙᵢₜ (S1220). Nᵢₙᵢₜ is a random value selected from the values between 0 and CWₚ. Subsequently, when the backoff counter value N is 0 according to step 4 (S1230; Y), the BS terminates the CAP (S1232). The BS may then perform a Tx burst transmission including transmission of a PDSCH/PDCCH/EPDCCH (S1234). On the contrary, when the backoff counter value N is not 0 (S1230; N), the BS decrements the backoff counter value by 1 according to step 2 (S1240). Subsequently, the BS checks whether the channel of U-cell(s) is idle (S1250). If the channel is idle (S1250; Y), the BS determines whether the backoff counter value is 0 (S1230). On the contrary, when the channel is not idle, that is, the channel is busy (S1250; N), the BS determines whether the channel is idle during a longer defer duration T_{d} (25usec or longer) than a slot duration (e.g., 9usec) according to step 5 (S1260). If the channel is idle during the defer duration (S1270; Y), the BS may resume the CAP. The defer duration may include a 16-usec duration and the immediately following mₚ consecutive slot durations (e.g., each being 9usec). On the contrary, if the channel is busy during the defer duration (S1270; N), the BS re-checks whether the channel of the U-cell(s) is idle during a new defer duration by performing step S1260 again.

Table 3 illustrates that mp, a minimum CW, a maximum CW, a maximum channel occupancy time (MCOT), and an allowed CW size applied to a CAP vary according to channel access priority classes.

**[Table 3]**

| Channel Access Priority Class (*p*) | *mₚ* | *CW*_{min,*p*} | *CW*_{max,*p*} | *T*_{*m*cot*p*} | allowed *CWₚ* sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

A CW size applied to the first DL CAP may be determined in various methods. For example, the CW size may be adjusted based on the probability of HARQ-ACK values corresponding to PDSCH transmission(s) within a predetermined time period (e.g., a reference TU) being determined as NACK. In the case where the BS performs a DL transmission including a PDSCH that is associated with a channel access priority class p on a carrier, if the probability z of HARQ-ACK values corresponding to PDSCH transmission(s) in reference subframe k (or reference slot k) being determined as NACK is at least 80%, the BS increases a CW value set for each priority class to the next higher allowed value. Alternatively, the BS maintains the CW value set for each priority class to be an initial value. A reference subframe (or reference slot) may be defined as the starting subframe (or slot) of the most recent transmission on the carrier made by the BS, for which at least some HARQ-ACK feedback is expected to be available.

### (2) Second DL CAP method

The BS may perform a DL signal transmission (e.g., a signal transmission including a discovery signal transmission, without a PDSCH) in an unlicensed band according to the second DL CAP method described below.

When the signal transmission duration of the BS is equal to or less than 1ms, the BS may transmit a DL signal (e.g., a signal including a discovery signal without a PDSCH) in the unlicensed band immediately after sensing the channel to be idle for at least a sensing duration T_{drs}=25 us. T_{drs} includes a duration T_{f} (=16us) following one sensing slot duration Tₛₗ (=9us).

### (3) Third DL CAP method

The BS may perform the following CAPs for DL signal transmission on multiple carriers in an unlicensed band.
1) Type A: The BS performs a CAP for multiple carriers based on a counter N defined for each carrier (a counter N considered in a CAP) and performs a DL signal transmission based on the CAP.
   - Type A1: The counter N for each carrier is determined independently, and a DL signal is transmitted on each carrier based on the counter N for the carrier.
   - Type A2: The counter N of a carrier with a largest CW size is set for each carrier, and a DL signal is transmitted on each carrier based on the counter N for the carrier.
2) Type B: The BS performs a CAP based on a counter N only for a specific one of a plurality of carriers and performs a DL signal transmission by checking whether the channels of the other carriers are idle before a signal transmission on the specific carrier.
   - Type B1: A single CW size is defined for a plurality of carriers, and the BS uses the single CW size in a CAP based on the counter N for a specific carrier.
   - Type B2: A CW size is defined for each carrier, and the largest of the CW sizes is used in determining Ninit for a specific carrier.

### Method of transmitting UL signal in unlicensed band

For a UL signal transmission in an unlicensed band, the BS may transmit information about a UL transmission period to the UE by signaling.

For a UL signal transmission in the unlicensed band, the UE performs a contention-based CAP. For example, the UE may perform a Type 1 CAP or a Type 2 CAP for UL signal transmission in the U-band. In general, the UE may perform a CAP configured/indicated by the BS (e.g., Type 1 CAP or Type 2 CAP) for the UL signal transmission.

### (1) Type 1 UL CAP Method

FIG. 7 is a flowchart illustrating UE's Type 1 CAP operation for UL signal transmission.

To transmit a signal in the U-band, the UE may initiate a CAP (S1510). The UE may randomly select a backoff counter N within a contention window (CW) according to step 1. In this case, N is set to an initial value Nᵢₙᵢₜ (S1520). Nᵢₙᵢₜ may have a random value between 0 and CWₚ. If it is determined according to step 4 that the backoff counter value (N) is 0 (YES in S1530), the UE terminates the CAP (S1532). Then, the UE may perform Tx burst transmission (S1534). If the backoff counter value is non-zero (NO in S1530), the UE decreases the backoff counter value by 1 according to step 2 (S1540). The UE checks whether the channel of U-cell(s) is idle (S1550). If the channel is idle (YES in S1550), the UE checks whether the backoff counter value is 0 (S1530). On the contrary, if the channel is not idle in S1550, that is, if the channel is busy (NO in S1550), the UE checks whether the corresponding channel is idle for a defer duration T_{d} (longer than or equal to 25 usec), which is longer than a slot duration (e.g., 9 usec), according to step 5 (S1560). If the channel is idle for the defer duration (YES in S1570), the UE may resume the CAP. Here, the defer duration may include a duration of 16 usec and mₚ consecutive slot durations (e.g., 9 usec), which immediately follows the duration of 16 usec. If the channel is busy for the defer duration (NO in S1570), the UE performs step S1560 again to check whether the channel is idle for a new defer duration.

Table 4 shows that the values of mₚ, a minimum CW, a maximum CW, a maximum channel occupancy time (MCOT), and allowed CW sizes, which are applied to the CAP, vary depending on channel access priority classes.

**[Table 4]**

| Channel Access Priority Class (*p*) | *mₚ* | *CW*_{min,*p*} | *CW*_{max,*p*} | *T*_{*uln*cot*p*} | allowed *CWₚ* sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127,255,511,1023} |
| 4 | 7 | 15 | 1023 | 6ms or 10 ms | {15,31,63,127,255,511,1023} |
| NOTE1:For *p* = 3,4 , *T*_{*uln*cot,*p*} =10ms if the higher layer parameter | | | | | |
| '*absenceOfAnyOtherTechnology-r14*' indicates TRUE, otherwise, *T*_{*uln*cot,*p*} =6ms. | | | | | |
| NOTE 2: When *T*_{*ulm*cot,*p*}=6ms it may be increased to 8 ms by inserting one or more gaps. The minimum duration of a gap shall be 100 µs The maximum duration before including any such gap shall be 6 ms. | | | | | |

The size of a CW applied to the Type 1 UL CAP may be determined in various ways. For example, the CW size may be adjusted depending on whether the value of of a new data indicator (NDI) for at least one HARQ process associated with HARQ ID ref, which is the HARQ process ID of a UL-SCH in a predetermined time period (e.g., a reference TU), is toggled. When the UE performs signal transmission using the Type 1 CAP associated with the channel access priority class p on a carrier, if the value of the NDI for the at least one HARQ process associated with HARQ ID ref is toggled, the UE may set CWₚ to CW_{min, p} for every priority class *p* ∈ {1,2,3,4}. Otherwise, the UE may increase CWₚ for every priority class *p* ∈ {1, 2, 3, 4} to a next higher allowed value.

A reference subframe (or slot) n_{ref} is determined as follows.

When the UE receives a UL grant in a subframe (or slot) n_{g} and transmits a UL-SCH in subframes (or slots) n₀,n₁,...n_{w}, starting from the subframe (or slot) n₀ without a gap (the subframe (or slot) n_{w} is the most recent subframe (or slot) before a subframe (or slot) n_{g}-3 in which the UE has transmitted a UL-SCH based on a Type 1 CAP), the reference subframe (or slot) n_{ref} is the subframe (or slot) n₀.

### (2) Type 2 UL CAP Method

When the UE uses the Type 2 CAP to transmit a UL signal (including the PUSCH) in a U-band, the UE may transmit the UL signal (including the PUSCH) in the U-band immediately after sensing that the channel is idle at least for a sensing period T_{short_ul} of 25 us. T_{short_ul} includes a duration T_{f} of 16 us immediately followed by one slot duration Tₛₗ of 9 us. T_{f} includes an idle slot duration Tₛₗ at the start thereof.

### 2. CP adaptation method for mixed numerology case

The above description (an NR frame structure, an RACH, a U-band system, etc.) may be applied in combination with methods proposed in the present disclosure, which will be described later, or may be supplemented to clarify the technical features of the methods proposed in the present disclosure.

In addition, the methods to be described later are related to UL transmission and may be equally applied even to a UL signal transmission method in the NR system (L-band) and the U-band system (U-band) described earlier. It is apparent that modifications or replacements may be made to be suitable for terms, expressions, structures, etc. defined in each system so that the technical idea proposed in the present disclosure may be implemented in a corresponding system.

For example, DL transmission through the methods to be described later may be performed in an L-cell and/or a U-cell defined in the U-band system.

In a cellular communication system such as an LTE/NR system, a method of utilizing, for traffic offloading, U-bands, such as 5/6 GHz and 60 GHz bands, as well as a U-band, such as a 2.4 GHz band, which is used mainly by a legacy Wi-Fi system, is under consideration.

As described above, the Wi-Fi standard (802.11ac) specifies a CCA threshold of-62 dBm for non-Wi-Fi signals and a CCA threshold of -82 dBm for Wi-Fi signals. In other words, when a signal of a device of a non-Wi-Fi system is received with a power of -62 dBm or more in a specific band, a station (STA) or an access point (AP) of a Wi-Fi system does not perform signal transmission in the specific band.

In the present disclosure, the term "unlicensed band (U-band)" may be replaced and interchangeably used with "shared spectrum".

In the NR system, various numerologies or SCSs are supported to support various services. For example, when an SCS is 15 kHz, the NR system supports a wide area in traditional cellular bands. When an SCS is 30 kHz/60 kHz, the NR system supports a dense urban area, a lower latency, and a wide carrier bandwidth (BW). When an SCS is 60 kHz or higher, the NR system supports a BW larger than 24.25 GHz to overcome phase noise.

An NR frequency band is defined as two types of frequency ranges, FR1 and FR2. FR1 and FR2 may be configured as in Table 6. FR2 may represent millimeter wave (mmW).

**[Table 5]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

A band (e.g., 52.6 GHz to 114.25 GHz bands, especially 71 GHz) higher than FR1 and FR2 bands is referred to as FR4. Waveform, SCS, CP length, timing, etc. defined for FR1 and FR2 in the legacy NR system may not be applied to FR4.

From a point of view of a BS (e.g., gNB) operating a specific cell, a UE (UEC) located in a cell center and a UE (UEE) located at a cell edge have the following characteristics. The UE_{C} and UE_{E} may be determined relative to each other based on a distance to the gNB. For example, among a UE1 and a UE2, a UE located relatively close to the gNB may be determined as the UE_{C}, and a UE located relatively far from the gNB may be determined as the UE_{E}. Additionally, the UE_{C} and the UE_{E} may be determined according to two SCS values configured by the BS for the corresponding cell and an SCS value indicated by the BS to each UE. Here, the two SCS values may be configured to mixed numerology within the cell. The UE may classify and/or configure UEs to operate with mixed numerology by reporting capability that the UE is capable of the mixed numerology operation.

A UE located in a cell center may receive a larger Doppler effect than a UE located at a cell edge. Accordingly, inter-carrier interference may be relatively large. On the other hand, the UE located in the cell center may have a smaller propagation delay than the UE located at the cell edge. Therefore, inter-symbol interference may be small.

The UE located at the cell edge may receive a smaller Doppler effect than the UE located at the cell edge. Accordingly, inter-carrier interference may be relatively small. On the other hand, the UE located at the cell edge may have a larger propagation delay than the UE located at the cell center. Therefore, inter-symbol interference may be large.

This may be summarized as follows.
1. UE_{C}
   1-A. Doppler effect is large → High ICI (Inter carrier interference)
   1-B. Propagation delay is small → Low ISI (Inter symbol interference)
2. UE_{E}
   2-A. Doppler effect is small → Low ICI
   2-B. Propagation delay is large → High ISI

The BS may schedule signals and/or channels for the UE_{C} and the UE_{E} on one BWP. The BS may use a plurality of numerologies to reduce influence of ICI and/or ISI of each UE. Briefly, the BS may schedule signals and/or channels using a relatively high Subcarrier Spacing (SCS) for the UE_{C}, which has a large ICI influence, and may schedule signals and/or channels using a relatively low SCS for the UE_{E}, which has a large ISI influence.

As a more specific example, a physical downlink control channel (PDCCH) commonly received by the UE_{E} and the UE_{C} may be transmitted through a common control resource set (CORESET). A PDCCH commonly received by the UE_{E} and the UE_{C} may be configured to use a relatively low SCS (e.g., SCS for the UE_{E}). The UE_{E} and the UE_{C} may receive scheduling of respective Physical Downlink Shared Channels (PDSCHs) through a commonly received PDCCH. Also, when the PDSCH for the UE_{E} and the PDSCH for the UE_{C} are scheduled by different PDCCHs, the different PDCCHs may be transmitted together in a common CORESET. The common CORESET may be configured to commonly use a low SCS. The PDSCH for the UE_{E} may be multiplexed based on a relatively low SCS, and the PDSCH for the UE_{C} may be multiplexed based on a relatively high SCS. If a relatively high SCS is used for the UE_{C}, the symbol length and CP length for the UE_{C} may be reduced. From a point of view of the BS and the UE_{C}, there is a disadvantage in that fast Fourier transform (FFT) of different sizes needs to be performed between a data channel and control channel for the UE_{C} and between a data channel for the UE_{E} and a control channel for the UEc. Therefore, the present specification may propose an adaptive CP configuration (CP adaptation or Adaptive CP configuration) method to be applied to such a situation.

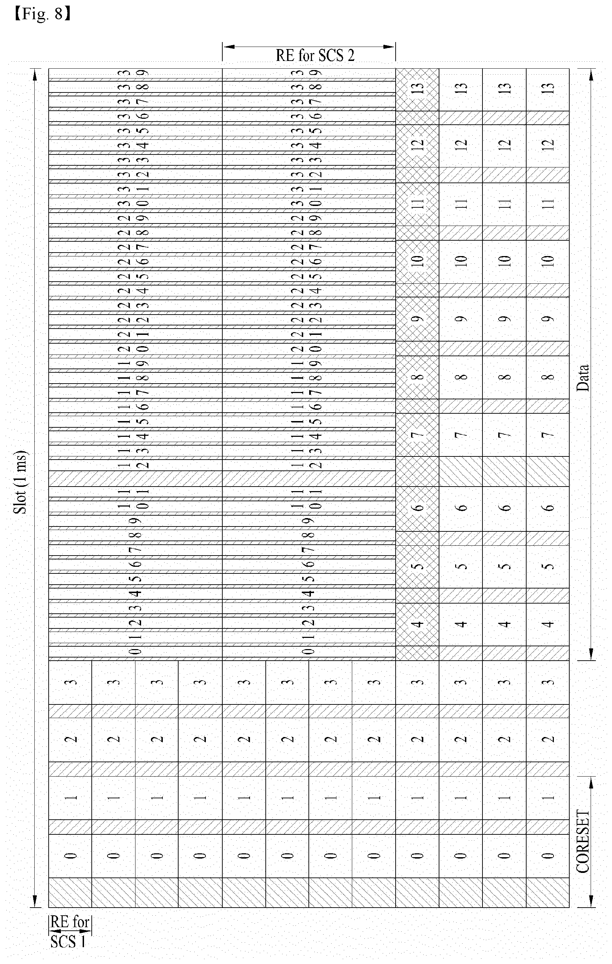

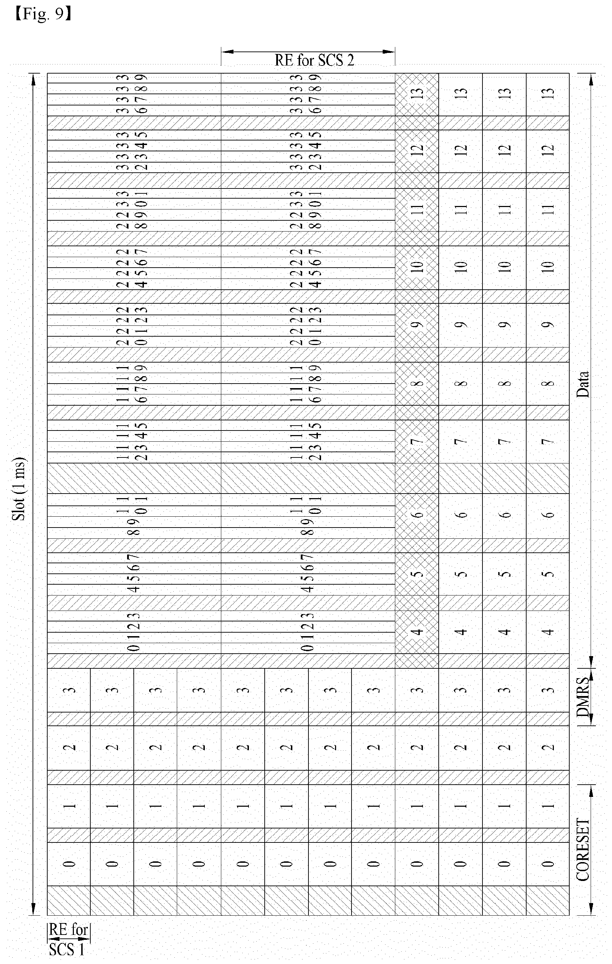

A basic concept is shown in FIG. 8. In FIGS. 8 and 9, hatched portions correspond to CP sections. In FIG. 8, a structure in which Orthogonal Frequency Division Multiplexing (OFDM) symbols using different SCSs coexist in a single slot (14 OFDM symbols) is considered. In this case, a situation in which at least two different SCSs are included in a specific time duration may be considered. The specific time duration may be, for example, 1 slot length (1 ms). When two different SCSs are considered, a relatively small SCS may be referred to as SCS1 and a relatively large SCS may be referred to as SCS2. An OFDM symbol using the SCS2 is referred to as a sub-OFDM symbol. M (M=SCS2/SCS1) sub-OFDM symbols may be included in one OFDM symbol. A boundary obtained by combining M sub-OFDM symbols may be configured to align with one OFDM symbol boundary. A boundary combining M sub-OFDM symbols may be determined based on the sum of CPs and symbols. Sub-OFDM symbols with M multiples of SCS (SCS2) are multiplexed according to the length of the small SCS (SCS1). When the FFT size applied in this case is N points for SCS1, the FFT size may be N/M points for SCS2. Characteristically, the BS may configure an SCS value to be used for a specific signal and/or channel (e.g., a PDSCH) using higher layer signaling (e.g., SIB or dedicated RRC) or DCI. The UE may receive and recognize that the same numerology is used for different channels (e.g., PDCCH/PDSCH) or receive and recognize that different numerologies are used according to information indicated by the BS.

FIG. 8 shows an example in which OFDM symbols and sub-OFDM symbols using different SCSs are expressed in a single slot. In FIG. 8, it is assumed that an SCS1 is 15 kHz and SCS2 is 60 kHz. As long as the SCS1 is relatively smaller than the SCS2, values of the SCS1 and the SCS2 may be changed. As seen from FIG. 8, four sub-OFDM symbols are included in one OFDM symbol (or that a boundary of the four sub-OFDM symbols coincides with a boundary of one OFDM symbol). In this case, the UE_{C} using the SCS2 may perform FFTs of different sizes to receive a signal and/or channel transmitted through the SCS1 and a signal and/or channel transmitted through the SCS2. Therefore, there is a disadvantage in that the complexity of a UE increases. In addition, the UEc using the SCS2 may have a disadvantage in that a CP is reduced and an influence of ISI is increased.

In order to solve the problem of increasing the complexity of the UE or the increased ISI influence according to the structure of FIG. 8, the CP adaptation method in which the structure of sub-OFDM symbols for the SCS2 is changed as shown in FIG. 9 may be used.

Referring to the structure of FIG. 9, a CP length of sub-OFDM symbols is increased compared to that of FIG. 8 and becomes equal to a CP length of the existing OFDM symbol. The location of the CP may be configured to be located before the first sub-OFDM symbol among the M sub-OFDM symbols. In addition, the M sub-OFDM symbols may be configured consecutively without CP between each other.

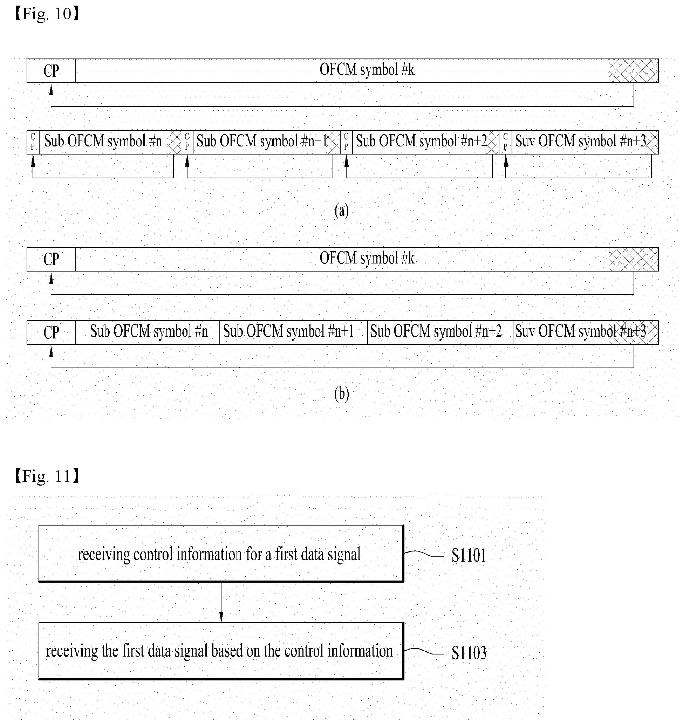

In this case, a method of configuring a CP located before the first sub-OFDM symbol among M sub-OFDM symbols may be based on an example of FIG. 10. In FIG. 10, a portion circulated by the CP is shaded. FIG. 10(a) shows that a CP of an OFDM symbol SCS1 is moved from the last part of the OFDM symbol in the state in which sub-OFDM symbols are configured as shown in FIG. 8 and CPs of the last part of sub-OFDM symbols SCS2 are moved from the last part of each of the sub-OFDM symbols. FIG. 10(b) shows a CP configuration related to a structure to which the CP adaptation method is applied, as shown in FIG. 9. Similarly to the configuration of FIG. 8, the last part within the existing OFDM symbol SCS1 is moved to the frontmost part within the symbol by the length of the CP. However, in the case of the sub-OFDM symbols SCS2, the last part within the symbol may be moved from the last sub-OFDM symbol among the M sub-OFDM symbols to the front of the first sub-OFDM symbol among the M sub-OFDM symbols by the same length as the CP length of the OFDM symbol SCS1.

Hereinafter, a sub-OFDM symbol group means a group including M sub-OFDM symbols corresponding to one OFDM symbol.

When the CP adaptation method is applied, the UE_{C} may use a relatively large SCS, which is advantageous for ICI and is advantageous for ISI because a CP value is configured larger than the original CP length of the corresponding SCS. In addition, a UE that intends to transmit and receive signals and/or channels using a plurality of numerologies may perform N-point IFFT (N being the number of samples constituting an OFDM symbol of the SCS1) on each of the existing OFDM symbol and sub-OFDM symbol group, and may additionally perform M number of N/M point FFT/IFFT (N/M being the number of samples constituting the sub-OFDM symbol of the SCS2) within the sub-OFDM symbol group. Since this is complexity equivalent to performing SC-OFDM, there is no difficulty in implementing a UE.

Additionally, when a signal is transmitted to the UE_{C} by applying CP adaptation, the SCS1 may be applied to a PDCCH, the SCS2 may be applied to a PDSCH, and the SCS1 may be applied to a DMRS related to a PDSCH. As shown in FIG. 9, the DMRS related to the PDSCH may be transmitted prior to the PDSCH transmitted with the SCS2 applied. In order to receive the PDSCH configured to the SCS2, the UEc may perform N-point Inverse Fast Fourier Transform (IFFT), and in this regard, the IFFT is performed based on an FFT size, which is the number of samples constituting the OFDM symbol of the SCS1, the DMRS needs to be configured to the SCS1.

With reference FIG. 8, a method of transmitting and receiving a signal by a BS and a UE via a method in which CP adaptation is not performed will be described below.

A method of FDMing and transmitting OFDM symbols corresponding to different numerologies in a BS is as follows. For convenience, a single OFDM symbol is described.
1. Modulation symbols that are supposed to use the SCS1 may be mapped to the f-domain RE.
   1-A. In this case, the f-domain RE in which sub-OFDM symbols using the SCS2 are to be positioned may be mapped while leaving empty.
2. Then, N-point IFFT may be performed to generate one t-domain OFDM symbol.
   2-A. A CP may be added before the corresponding OFDM symbol.
3. Then, modulation symbols that are supposed to use the SCS2 may be mapped to the f-domain RE.
4. Then, N/M-point IFFT may be performed M times to generate M t-domain sub-OFDM symbols.
   4-A. Each CP may be added before each sub-OFDM symbol. (In this case, each CP length is 1/M of the CP length of the OFDM symbol corresponding to the SCS1)
   4-B. Then, M {CP + sub-OFDM symbol }s may be connected to generate a t-domain sub-OFDM symbol group.
5. A final transmission signal may be generated by adding the OFDM symbol created through step 2 and the sub-OFDM symbol group created through step 4.
6. The generated signal may be transmitted to the UE(s).

Hereinafter, a method of receiving FDMed OFDM symbols corresponding to different numerologies in a UE will be described. For convenience, a single OFDM symbol is described.
1. The received signal (corresponding to a single OFDM symbol) may be divided into N/M samples M times and N/M point FFT may be performed M times.
   1-A. In this case, a sample interval at which each N/M point FFT is performed may be configured to be as wide as the CP length of the SCS2.
2. A modulation symbol for M sub-OFDM symbols for the SCS2 may be acquired.

With reference to FIG. 9, a method of transmitting and receiving a signal between a BS and a UE according to a method in which CP adaptation is used will be described as follows.

A method of FDMing and transmitting OFDM symbols corresponding to different numerologies in a BS is as follows. For convenience, a single OFDM symbol is described.
1. Modulation symbols that are supposed to use the SCS1 may be mapped to a f-domain RE.
   1-A. In this case, the f-domain RE in which sub-OFDM symbols using the SCS2 are to be positioned may be mapped while leaving empty.
2. Then, N-point IFFT may be performed to generate one t-domain OFDM symbol.
   2-A. A CP may be added before the corresponding OFDM symbol.
3. Then, modulation symbols that are supposed to use the SCS2 may be mapped to the f-domain RE.
4. Then, N/M-point IFFT may be performed M times to generate M t-domain sub-OFDM symbols.
   4-A. M t-domain sub-OFDM symbols may be sequentially connected to generate N point OFDM symbols.
   4-B. Then, the final OFDM symbol group may be generated by adding a CP before the first sub-OFDM symbol. (which may be taken from the last part of the last sub-OFDM symbol) (in this case, the CP length is equal to a CP of the OFDM symbol)
5. A final transmission signal may be generated by adding the OFDM symbol created through step 2 and the sub-OFDM symbol group created through step 4.
6. The generated signal may be transmitted to the UE(s).

Hereinafter, another embodiment of a method of generating and transmitting a signal of a BS will be described.
1. Modulation symbols that are supposed to use the SCS1 may be mapped to the f-domain RE.
   1-A. In this case, the f-domain RE in which sub-OFDM symbols using the SCS2 are to be positioned may be mapped while leaving empty.
2. Then, N-point IFFT may be performed to generate one t-domain OFDM symbol.
3. Then, modulation symbols that are supposed to use the SCS2 may be mapped to the f-domain RE.
4. Then, an N-point OFDM symbol may be generated by performing N/M-point IFFT M times to generate M t-domain sub-OFDM symbols and sequentially connecting the symbols.
5. A composite OFDM symbol may be generated by adding the OFDM symbol created through step 2 and the OFDM symbol created through step 4.
6. A final transmission signal may be generated by adding a CP with a configured length to the composite OFDM symbol.
7. The generated signal may be transmitted to the UE(s).

Hereinafter, a method of receiving FDMed OFDM symbols corresponding to different numerologies in a UE will be described. For convenience, a single OFDM symbol is described.
1. N-point FFT may be performed on a received signal (corresponding to a single OFDM symbol) according to the SCS1.
2. Then, equalization may be performed on a corresponding sequence to reduce ISI in the f-domain.
3. N-point IFFT may be performed to generate a t-domain sequence.
4. The t-domain sequence obtained in step 3 may be divided into N/M samples M times for the SCS2 and N/M-point FFT may be performed.
5. A modulation symbol for M sub-OFDM symbols for the SCS2 may be obtained.

Since examples of the above-described proposal method may also be included in one of implementation methods of the various embodiments of the present disclosure, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal). For example, whether a CP having the structure shown in FIG. 9 is applied as one of the proposed methods of the present disclosure may be indicated by the BS to the UE through a predefined signal. The high layer may include, for example, one or more of functional layers such as MAC, RLC, PDCP, RRC, and SDAP.

Methods, embodiments, or descriptions for implementing the method proposed in this specification may be separately applied or one or more methods (or embodiments or descriptions) may be applied in combination.

### Embodiment

Embodiments of the present disclosure may be implemented by organically combining one or more of the operations described above.

One of the embodiments implemented by a combination of the operations described in the present disclosure may be as shown in FIG. 11.

FIG. 11 is a flowchart of a method of transmitting and receiving a signal according to an embodiment of the present disclosure.

Referring to FIG. 11, an embodiment of the present disclosure implemented through a communication device may include receiving control information of a first data signal (S1101) and receiving the first data signal based on the control information (S1103).

The first data signal may be transmitted based on the mixed numerology structure shown in FIGS. 8 and/or 9.

For example, when the first data signal is transmitted based on the mixed numerology structure of FIG. 9, the first data signal and the second data signal may be included and transmitted in the Frequency Division Multiplexed (FDMed) signal. The first data signal may be a signal for a first UE, and the second data signal may be a signal for a second UE.

Each SCS and each CP may be applied to the first data signal and the second data signal. For example, a first SCS may be applied to the first data signal, and a second SCS may be applied to the second data signal. A first CP may be applied to the first data signal, and a second CP may be applied to the second data signal. The first SCS may be the SCS2 described in Section 2, and the second SCS may be the SCS1 described in Section 2. Thus, the first SCS may be a larger SCS than the second SCS.

When the first SCS is larger than the second SCS, the first data signal may be transmitted through a sub-OFDM symbol, and the second data signal may be transmitted through an OFDM symbol. A boundary of one sub-OFDM symbol group including a plurality of sub-OFDM symbols on the time domain may be configured to coincide with a boundary of an OFDM symbol on the time domain.

A CP for each signal may be based on the CP structure described through FIGS. 8 to 10. For example, when the CP structure is based on FIG. 9, a CP applied to the first data signal may be configured in units of sub-OFDM symbol groups. In detail, the first CP applied to a sub-OFDM symbol group may be configured in the same section as the second CP in the time domain. Since the first CP is configured in the same section as the second CP in the time domain, the first CP is located only before the first sub-OFDM symbol in the sub-OFDM symbol group, and a CP section is not located between sub-OFDM symbols. As described with reference to FIG. 10, circulation based on the first CP performed for data signal transmission is performed only on a symbol located last in the time domain among sub-OFDM symbols in a sub-OFDM symbol group.

Information on whether the CP of the proposed structure is to be applied may be informed by the BS to the UE through a predefined signal. Accordingly, the UE may determine that the first CP is configured in the same section as the second CP in the time domain based on reception of specific signaling from the BS and receive a first data signal.

The number of sub-OFDM symbols included in the sub-OFDM symbol group is determined based on a ratio between the first SCS and the second SCS. When the ratio of the first SCS to the second SCS is M:1, the number of sub-OFDM symbols included in one sub-OFDM symbol group may be M.

Control information for scheduling may be transmitted with the second SCS applied at a time point preceding the first data signal.

A Demodulation Reference Signal (DM-RS) related to the first data signal may be received with the second SCS applied at a time point preceding the sub-OFDM symbol group.

The first UE may correspond to a UE_{C} located relatively located at the cell center, and the second UE may correspond to a UE_{E} relatively located at the cell edge. In other words, based on (i) a distance between the first UE and the BS and (ii) a distance between the second UE and the BS, the first SCS may be applied to the first data signal, and the second SCS may be applied to the second data signal.

In addition to the operation of FIG. 11 described above, one or more of the operations described through FIGS. 1 to 11 may be combined and additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

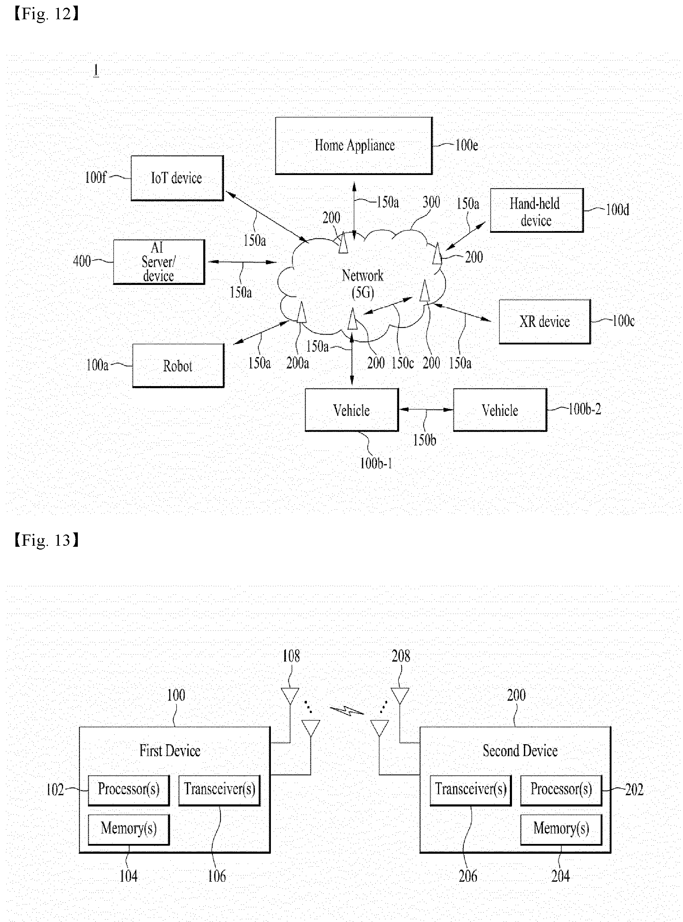

FIG. 12 illustrates a communication system 1 applied to the present disclosure.

Referring to FIG. 12, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 13 illustrates wireless devices applicable to the present disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

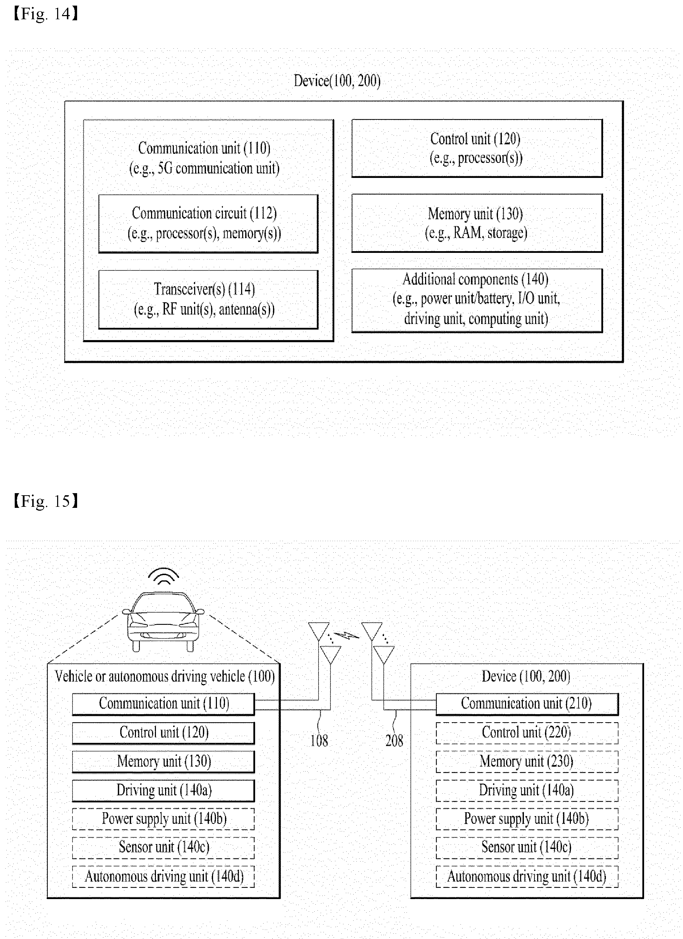

FIG. 14 illustrates another example of a wireless device applied to the present disclosure. The wireless device may be implemented in various forms according to a use case/service (refer to FIG. 12).

Referring to FIG. 14, wireless devices 100 and 200 may correspond to the wireless devices 100 and 200 of FIG. 13 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcasting terminal, a hologram device, a public safety device, an MTC device, a medical device, a FinTech device (or a finance device), a security device, a climate/environment device, the AI server/device (400 of FIG. 12), the BSs (200 of FIG. 12), a network node, or the like. The wireless device may be mobile or fixed according to a use case/service.

In FIG. 14, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 15 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Availability]

As described above, the present disclosure is applicable to various wireless communication systems.

## Claims

1. A method of transmitting and receiving a signal by a first user equipment (UE) in a wireless communication system, the method comprising:
receiving control information of a first data signal; and
receiving the first data signal based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
based on reception of specific signaling from a base station (BS), the first CP applied to the sub-OFDM symbol group is configured in the same section as the second CP in a time domain, a CP section is not located between sub-OFDM symbols in the sub-OFDM symbol group, and circulation based on the first CP is performed only on a last symbol in the time domain among the sub-OFDM symbols.

2. The method of claim 1, wherein a number of sub-OFDM symbols included in the sub-OFDM symbol group is determined based on a ratio between the first SCS and the second SCS.

3. The method of claim 1, wherein the second SCS is applied to the control information.

4. The method of claim 1, wherein a Demodulation Reference Signal (DM-RS) related to the first data signal is received at a time point preceding the sub-OFDM symbol group, and the second SCS is applied to the DM-RS.

5. The method of claim 1, wherein, based on (i) a distance between the first UE and the BS and (ii) a distance between the second UE and the BS, the first SCS is applied to the first data signal and the second SCS is applied to the second data signal.

6. A first user equipment (UE) for transmitting and receiving a signal in a wireless communication system, the first UE comprising:
at least one transceiver;
at least one processor; and
at least one memory operatively connected to the at least one processor and configured to store instructions that when executed causes the at least one processor to perform a specific operation including:
receiving control information of a first data signal; and
receiving the first data signal based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
the first CP applied to the sub-OFDM symbol group is configured in the same section as the second CP in a time domain.

7. The first UE of claim 6, wherein a number of sub-OFDM symbols included in the sub-OFDM symbol group is determined based on a ratio between the first SCS and the second SCS.

8. The first UE of claim 6, wherein the second SCS is applied to the control information.

9. The first UE of claim 6, wherein a Demodulation Reference Signal (DM-RS) related to the first data signal is received at a time point preceding the sub-OFDM symbol group, and the second SCS is applied to the DM-RS.

10. The first UE of claim 6, wherein, based on (i) a distance between the UE and the BS and (ii) a distance between the second UE and the BS, the first SCS is applied to the first data signal and the second SCS is applied to the second data signal.

11. An apparatus for a user equipment (UE), comprising:
at least one processor; and
at least one computer memory operatively connected to the at least one processor and configured to when executed cause the at least one processor to perform an operation including:
receiving control information of a first data signal; and
receiving the first data signal based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
the first CP applied to the sub-OFDM symbol group is configured in the same section as the second CP in a time domain.

12. The apparatus of claim 1, wherein a number of sub-OFDM symbols included in the sub-OFDM symbol group is determined based on a ratio between the first SCS and the second SCS.

13. The apparatus of claim 1, wherein the second SCS is applied to the control information.

14. The apparatus of claim 1, wherein a Demodulation Reference Signal (DM-RS) related to the first data signal is received at a time point preceding the sub-OFDM symbol group, and the second SCS is applied to the DM-RS.

15. The apparatus of claim 1, wherein, based on (i) a distance between the first UE and the BS and (ii) a distance between the second UE and the BS, the first SCS is applied to the first data signal and the second SCS is applied to the second data signal.

16. A computer-readable storage medium including at least one computer program that causes at least one processor to perform an operation comprising:
receiving control information of a first data signal; and
receiving the first data signal based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
the first CP applied to the sub-OFDM symbol group is configured in the same section as the second CP in a time domain.

17. The storage medium of claim 16, wherein a number of sub-OFDM symbols included in the sub-OFDM symbol group is determined based on a ratio between the first SCS and the second SCS.

18. The storage medium of claim 16, wherein the second SCS is applied to the control information.

19. The storage medium of claim 16, wherein a Demodulation Reference Signal (DM-RS) related to the first data signal is received at a time point preceding the sub-OFDM symbol group, and the second SCS is applied to the DM-RS.

20. The storage medium of claim 16, wherein, based on (i) a distance between the UE and the BS and (ii) a distance between the second UE and the BS, the first SCS is applied to the first data signal and the second SCS is applied to the second data signal.

21. A method of transmitting and receiving a signal by a base station (BS) in a wireless communication system, the method comprising:
transmitting control information of a first data signal; and
transmitting the first data signal to a first user equipment (UE) based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
the first CP applied to the sub-OFDM symbol group is configured in the same section as the second CP in a time domain, a CP section is not located between sub-OFDM symbols in the sub- OFDM symbol group, and circulation based on the first CP is performed only on a last symbol in the time domain among the sub-OFDM symbols.

22. The method of claim 21, wherein a number of sub-OFDM symbols included in the sub-OFDM symbol group is determined based on a ratio between the first SCS and the second SCS.

23. The method of claim 21, wherein the second SCS is applied to the control information.

24. The method of claim 21, wherein a Demodulation Reference Signal (DM-RS) related to the first data signal is received at a time point preceding the sub-OFDM symbol group, and the second SCS is applied to the DM-RS.

25. The method of claim 21, wherein, based on (i) a distance between the UE and the BS and (ii) a distance between the second UE and the BS, the first SCS is applied to the first data signal and the second SCS is applied to the second data signal.

26. A base station (BS) for transmitting and receiving a signal in a wireless communication system, comprising:
at least one transceiver;
at least one processor; and
at least one memory operatively connected to the at least one processor and configured to store instructions that when executed causes the at least one processor to perform a specific operation including:
transmitting control information of a first data signal; and
transmitting the first data signal to a first user equipment (UE) based on the control information,
wherein:
the first data signal is included in a Frequency Division Multiplexed (FDMed) signal, and the FDMed signal includes a second data signal for a second UE;
a first Subcarrier Spacing (SCS) and a first Cyclic Prefix (CP) are applied to the first data signal, and a second SCS and a second CP are applied to the second data signal;
based on that the first SCS is larger than the second SCS, a boundary of a sub-OFDM symbol group to which the first SCS is applied is configured to coincide with one OFDM symbol boundary to which the second SCS is applied; and
the first CP applied to the sub-OFDM symbol group is configured in the same section as the second CP in a time domain.

27. The BS of claim 26, wherein a number of sub-OFDM symbols included in the sub-OFDM symbol group is determined based on a ratio between the first SCS and the second SCS.

28. The BS of claim 26, wherein the second SCS is applied to the control information.

29. The BS of claim 26, wherein a Demodulation Reference Signal (DM-RS) related to the first data signal is received at a time point preceding the sub-OFDM symbol group, and the second SCS is applied to the DM-RS.

30. The BS of claim 26, wherein, based on (i) a distance between the UE and the BS and (ii) a distance between the second UE and the BS, the first SCS is applied to the first data signal and the second SCS is applied to the second data signal.
